# EUROPEAN PATENT SPECIFICATION

(11) **EP 4 502 571 B1**
(45) Date of publication and mention of the grant of the patent: **23.07.2025**
(21) Application number: 24178636.7
(22) Date of filing: 28.05.2024
(51) Int. Cl.: G01N 3/18, G01N 3/42, G01Q 10/04, G01Q 60/24, G01Q 60/36

(54) **NANOINDENTATION DEVICE FOR HYDRATES**
NANOINDENTIERUNGSVORRICHTUNG FÜR HYDRATE
DISPOSITIF DE NANOINDENTATION POUR HYDRATES

(30) Priority: 04.08.2023 CN 202310978407
(43) Date of publication of application: 05.02.2025
(73) Proprietor: Qingdao Institute of Marine Geology, Qingdao, Shandong 266237 (CN); Qingdao Marine Science and Technology Center, Qingdao, Shandong 266237 (CN)
(72) Inventor: LI, Yanlong, Qingdao, 266237 (CN); WANG, Hongbin, Qingdao, 266237 (CN); WU, Nengyou, Qingdao, 266237 (CN); QI, Minhui, Qingdao, 266237 (CN); HU, Gaowei, Qingdao, 266237 (CN)
(74) Representative: Bayramoglu et al.

(56) References cited:
- CN-A- 108 535 129
- CN-A- 110 980 751
- CN-U- 208 399 543
- CN-U- 210 154 960
- JP-A- 2007 155 460
- JP-A- 2008 128 656
- US-A- 5 675 154
- US-A1- 2007 085 022
- US-A1- 2019 204 194
- US-A1- 2020 174 037
- US-A1- 2022 018 748

## Description

### BACKGROUND OF THE INVENTION

### 1. Technical Field

The invention belongs to the technical field of microscopic testing of hydrates, and particularly relates to a nanoindentation device for measuring the micromechanical properties of hydrates in an ultralow-temperature environment.

### 2. Description of Related Art

Since the natural gas hydrate was listed as the 173rd mineral in China, technical devices related to basic study of hydrates have witnessed a rapid development. Microscopic test techniques represented by X-ray CT, the high/low-field nuclear magnetic technique and the SEM technique play an important role in disclosing the microscopic response mechanism of the natural gas hydrate. At present, the resolution of X-CT in testing hydrates has reaches the micron level, and the combined use of the low field nuclear magnetic technique and the SEM technique can realize detection and analysis of the microtopography and phase change process of hydrates from the micron level to the submicron level.

The mechanical property of hydrates is one of the most important physical properties, technical means for microscopic testing of hydrates such as the ring-shear test, the triaxial test and the direct-shear test have been developed at home and abroad at present, and the combination of these technical means with X-CT and the low-field nuclear magnetic technique can realize a joint test of the mechanical properties and internal structural characteristics of a hydrate system and provide an important means for revealing the deformation mechanism of hydrates. However, all these techniques cannot effectively characterize the mechanical properties of the hydrate system at the nano-submicron level, thus making it impossible to further detect the microtopography and phase change process of hydrates from the micro perspective.

CN 208399543U discloses an atomic force microscope mult-type hydrate observation device, comprising: a glove box, a dryingchannel, a cooling passage, a gas pipeline and a liquid nitrogen tank, wherein the glove box is provided with a synthesis chamber, and the synthesis chamber is provided an atomic force microscope, on which a hot and cold stage is fixed on a stage of the atomic force microscope, a cavity is arranged in the hot and cold stage, and a closed cooling chamber is arranged in the liquid nitrogen tank, and the drying channel includes an intake pipe and an outlet gas pipe, the intake pipe is provided with a liquid nitrogen pump, two interfaces at one end of the drying channel are respectively connected into the glove box, and two interfaces at the other end are respectively connected to the cooling cavity.

US 2022/018748A1 discloses a traceable in-situ micro-and nano-indentation testing instrument under variable temperature conditions. A macro-micro switchable mechanical loading module, a nano mechanical loading module and an indentation position optical positioning module are fixed on a gantry beam, an optical imaging axis of an optical microscopic in-situ observation or alignment module and a loading axis of the nano mechanical loading module are coplanar, the optical microscopic in-situ observation oralignment module and the function switchable module are mounted on a table top of a marble pedestal, and a contactor ambient mixed variable temperature module is fixedly mounted on the function switchable module.

US 2020/174037A1 discloses a testing device for testing adhesion force, which includes a thermal insulated glove box, an atomic force microscope, a cryogenic sample stage, a high pressure gas source and a circulating chiller. The atomic force microscope includes a probe for adhering mineral particles. The cryogenic samplestage is configured for preparing gas hydrate sample. Thecryogenic sample stage is arranged below the probe. The atomic force microscope and the cryogenic sample stage are placed in the thermal insulated glove box. The high pressure gas source provides pressure required for synthesis of gashydrates, the high pressure gas source comprises a highpressure chamber covered on the cryogenic sample stage and a high pressure gas cylinder connected with the highpressure chamber. The circulating chiller, an outlet of the circulating chiller is connected with the thermal insulated glove box to control humidity and temperature inside thethermal insulated glove box.

CN 210154960U discloses an in-situ high/low temperature indentation testing device for cone beam CT imaging, which includes a cone beam CT imaging unit, a high/low temperature indentation testing unit, an electric rotating platform, a vibration isolation table and a silicone oil temperature control device. The cone beam CT imaging unit, the electric rotating platform and the silicone oil temperature control device are installed on the vibration isolation table; the high/low temperature indentation testing unit is fixed on the electric rotating platform. The high/low temperature indentation testing unit includes a high/low temperature loading submodule, a precision loading and detection submodule, and a vacuum guarantee submodule.

The nanoindentation technique, with the characteristics of high precision and high flux, has been widely used for studying the mechanical properties of materials at the nanoscale. However, due to the limitations of the low-temperature and high-pressure condition, phase changes and other features of hydrates, existing nanoindentation techniques cannot be directly used for testing hydrates, leading to a technical blank in test the nanomechanical properties of the hydrates.

### BRIEF SUMMARY OF THE INVENTION

In view of the defect that existing nanoindentation techniques cannot be directly used for testing hydrates because the hydrates are prone to phase changes under a normal temperature and pressure condition, the invention provides a nanoindentation device capable of quickly testing hydrate samples in an ultralow-temperature environment, thus providing a basic technical means for representing the nanomechanical properties of hydrates.

The technical solution of the invention is to provide a nanoindentation device for hydrates as presented in the appended claims.

Compared with the prior art, the invention has the following advantages and positive effects:
(1) The liquid nitrogen is used to maintain a relative low-temperature environment and the copper sheet is used for heat conduction to realize accurate temperature control, such that the temperature of the sample cell mounted on the sample stand can be kept constant on one hand; on the other hand, vibrations caused by boiling of the liquid nitrogen when the liquid nitrogen is used for direct cooling are avoided, and a silent environment is created for indenting the nano probe, thus improving measurement accuracy;
(2) In the whole test process, a positive-pressure nitrogen environment is maintained in the glovebox to prevent invasion of moisture and air from the outside to prevent icing on the surface of the hydrate sample, thus effectively solving the problem of a large nanoindentation test error caused by frosting or icing on the surface of the hydrate sample.
(3) The probe and the sample can be separated or in rough contact by rough adjustment of the nano positioning stage, the sample can be mounted by rough adjustment and movement of the sample stand, the sample stand and the nano positioning stage can be aligned and the distance between the sample stand and the nano positioning stage can be measured by laser focusing, such that the alignment accuracy and distance measurement accuracy are high;
(4) The nano positioning stage and the sample stand can be separated, such that the influence of an ultralow temperature on precision parts of the nano test module and the nano positioning stage in a traditional integrated design scheme is avoided, thus effectively solving the problem of short service life of piezoelectric elements in an ultralow temperature environment.

### BRIEF DESCRIPTION OF THE SEVERAL VIEWS OF THE DRAWINGS

FIG. 1 is a schematic overall structural diagram of a nanoindentation device according to one embodiment of the invention;
FIG. 2 is a schematic connection diagram of a glovebox and accessories of the glovebox in FIG. 1;
FIG. 3 is a schematic structural diagram of a macro-movement system and a micro-movement system of a nano positioning stage according to one embodiment of the invention;
FIG. 4 is a schematic structural diagram of a sample stand according to one embodiment of the invention.

In the FIGS.: 1-1, static zone; 1-2, transition zone; 1-3, contaminated zone; 2, sample stand; 2-1, sample cell mounting chamber; 2-2, liquid nitrogen containing chamber; 2-3, heat insulation plate; 2-4, heat-conduction copper sheet; 2-5, heat-insulation protective layer; 2-6, sample cell; 2-7, hydrate sample; 2-8, temperature probe; 2-9, electromagnetic heating pad; 2-10, sliding rail system; 2-11, heat-insulation protective layer; 2-12, transparent isolation hood; 2-13, liquid nitrogen; 2-14, transparent insolation hood; 3, optical microscope; 4, nano positioning stage; 4-1, micro-movement system; 4-2, macro-movement system; 4-3, Z-axis micro-movement suspension support; 4-4, nano positioning stage support rod; 4-2-1, slideway of the macro-movement system in an X-axis direction; 4-2-2, slideway of the macro-movement system in a Y-axis direction; 5-1, nano probe; 5-2, torque lever; 5-3, support lever; 5-4, piezoelectric actuator; 6, anti-vibration platform; X1, vacuum pump; X2, high-purity liquid nitrogen.

### DETAILED DESCRIPTION OF THE INVENTION

To gain a better understanding of the objective, features and advantages of the invention, the invention will be further described below in conjunction with accompanying drawings and embodiments. Many specific details are expounded in the following description to provide a sufficient understanding of the invention. However, the invention can also be implemented in other ways different from those described here. Therefore, the invention is not limited to the specific embodiments disclosed below.

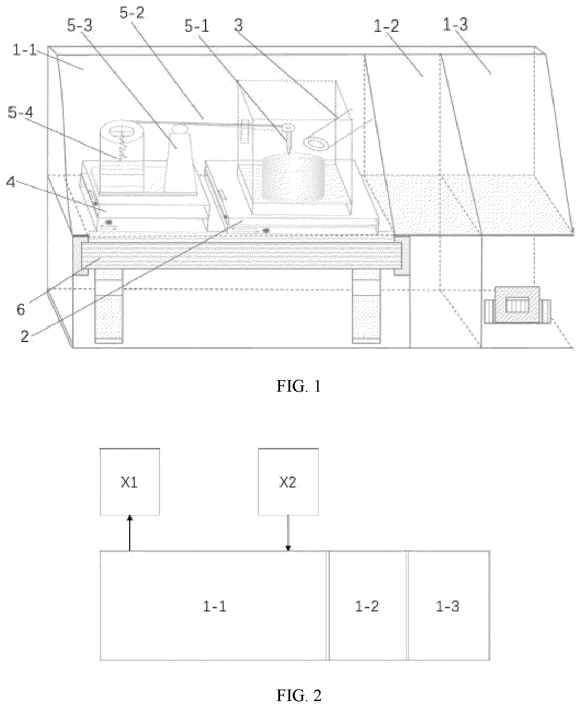

The invention provides a nanoindentation device for hydrates, which as shown in FIG. 1, comprises a glovebox, a micro-nano test module, a nano positioning stage 4, a sample stand 2, an optical microscope 3, an anti-vibration platform 6, a control cabinet and accessories.

Referring to FIG. 1 and FIG. 2 again, the glovebox is used for providing a clean environment for hydrate testing, and mainly comprises three cavities which are a contaminated zone 1-3, a transition zone 1-2 and a static zone 1-1 respectively, wherein the static zone 1-1 is connected to a vacuum pump X1 and high-purity liquid nitrogen X2 respectively, the vacuum pump X1 is mainly used for pumping out air from the cavities of the glovebox to form a negative pressure in the cavities of the glovebox, and the high-purity liquid nitrogen X2 is mainly used for injecting low-temperature nitrogen into the cavities of the glovebox to form a relatively low-temperature, dry, oxygen-free and positive-pressure environment in the cavities of the glovebox. The contaminated zone 1-3 is a space, in direct contact with a normal temperature and pressure environment in the outside, of the glovebox and is mainly used for temporarily storing a sample, and the transition zone 1-2 is mainly used for connecting and isolating the static zone 1-1 and the contaminated zone 1-3.

The anti-vibration platform 6, the sample stand 2, the nano positioning stage 4, the micro-nano test module and the optical microscope 3 are all mounted in the static zone 1-1 of the glovebox. The anti-vibration platform 6 is mainly used for buffering micro-vibrations from the external environment to provide a stable quasi-static environment for sample testing, and the sample stand 2, the nano positioning stage 4, the micro-nano test module and the optical microscope 3 are all mounted on the anti-vibration platform 6; the nano positioning stage 4 and the sample stand 2 are mounted in parallel, and the nano positioning stage 4 drives the micro-nano test module to perform indentation on the sample on the sample stand 2; the micro-nano test module records the displacement and force when performing indentation on the sample, and transmits the displacement and force to the control cabinet in real time; and the optical microscope 3 is obliquely mounted above the sample stand 2 and inclines by a certain angle with respect to an indentation point of an indentation head of the micro-nano test module to avoid interference between the optical microscope and a nano probe, thus assisting in locating the indentation point and observing in real time a morphology change of the hydrate sample when the probe is indented into the sample.

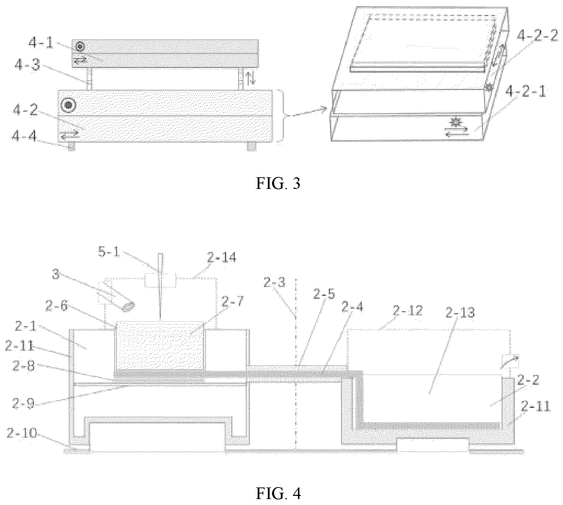

The nano positioning stage 4 comprises a macro-movement system 4-2 and a micro-movement system 4-1; as shown in FIG. 3, the macro-movement system 4-2 is fixed on a surface of the anti-vibration platform 6, and the micro-movement system 4-1 is mounted above the macro-movement system 4-2; each of the macro-movement system 4-2 and the micro-movement system 4-1 comprises two sliding rail systems which are in an X-axis direction and a Y-axis direction respectively, movement ranges of the macro-movement system in the X-axis direction and the Y-axis direction at centimeter level, and the movement positioning accuracy of the macro-movement system is 0.01 mm; and movement ranges of the micro-movement system in the X-axis direction and the Y-axis direction are at a micron level, and the movement positioning accuracy of the micro-movement system is 0.1 nm. Micro-adjustment between the macro-movement system and the micro-movement system in a Z-axis direction is realized by means of suspension supports 4-3, macro-adjustment between the macro-movement system 4-2 and the micro-movement system 4-1 may not be set, and movement of the nano positioning stage 4 in the Z-axis direction is realized by means of rotation of the suspension supports 4-3 and support rods 4-4, wherein macro-movement of the nano positioning stage in the Z-axis direction is realized by means of rotation of the support rods 4-4, and swivel nuts of the support rods 4-4 drive the macro-movement system 4-2 and the micro-movement system 4-1 to move upwards/downwards synchronously during the rotation process; and micro-movement of the nano positioning stage in the Z-axis direction is realized by means of rotation of the suspension supports 4-3, the suspension supports 4-3 may be designed into electric micrometer telescopic rods or other structures, and swivel nuts of the micrometer telescopic rods drive the micro-movement system 4-1 to move upwards/downwards during the rotation process. The mechanical principle of micro-movement and macro-movement is a mature technique and will not be defined in detail here.

Referring to FIG. 1 again, the micro-nano test module comprises a piezoelectric actuator 5-4, a support lever 5-3, a torque lever 5-2 and a nano probe 5-1, two ends of the torque lever 5-2 are connected to the piezoelectric actuator 5-4 and the nano probe 5-1 respectively, the support lever 5-3 and the piezoelectric actuator 5-4 are both mounted on the nano positioning stage 4, and the piezoelectric actuator 5-4 is mainly used for driving one end of the torque lever 5-2 to move upwards and downwards; and when the piezoelectric actuator 5-4 drives the torque lever 5-2 to move upwards, the nano probe 5-1 at the other end of the torque lever 5-2 is indented into a natural gas hydrate sample 2-7, and the piezoelectric actuator 5-4 records an indentation depth of the nano probe 5-1 and a force during the indentation process.

As shown in FIG. 4, the sample stand 2 comprises two chambers which are a sample cell mounting chamber 2-1 and a liquid nitrogen containing chamber 2-2 respectively, one of the chambers is used for containing liquid nitrogen, the other chamber is used for mounting and fixing a sample cell 2-6, the two chambers are not in direct contact and are isolated by means of a heat insulation plate 2-3 and connected by means of a heat-conduction copper sheet 2-4, and the liquid nitrogen containing chamber 2-2 is provided with a semi-closed transparent isolation hood 2-14. A low temperature in the liquid nitrogen containing chamber 2-2 is conducted to the sample cell by the heat-conduction copper sheet 2-4 to cool the sample cell 2-6. A temperature probe 2-8 and an electromagnetic heating pad 2-9 are arranged at the bottom of the sample cell mounting chamber 2-1; and in a case where the temperature of the bottom of the sample cell mounting chamber 2-1 falls below a set temperature under the action of the temperature of the liquid nitrogen conducted by the heat-conduction copper sheet 2-4, the electromagnetic heating pad 2-9 will be started automatically and heat the sample cell 2-6 to keep the temperature of the bottom of the sample cell 2-6 constant. The sample cell mounting chamber 2-1 and the liquid nitrogen containing chamber 2-2 are isolated, such that a silent environment in the sample cell mounting chamber 2-1 can be maintained to improve the test stability of a nanoindenter.

In addition, two sliding rail systems 2-10 allowing the sample stand 2 to move in the X-axis direction and the Y-axis direction are mounted below the sample stand 2 and used for controlling movement of the sample stand 2 in the X-axis direction and the Y-axis direction to facilitate installation of the sample cell 2-6 and injection of the liquid nitrogen. A laser alignment hole is formed in a side, close to the nano positioning stage 4, of the sample stand 2, and a laser alignment light source is arranged on a side, close to the sample stand 2, of the micro-movement system 4-1 of the nano positioning stage 4; and when the laser alignment light source and the laser alignment hole are aligned, the sample stand 2 and the nano positioning stage 4 are aligned in the Y-axis direction and the Z-axis direction, and the distance between the sample stand 2 and the nano positioning stage 4 in the X-axis direction is measured by laser ranging after alignment. When the nano positioning stage 4 and the sample stand 2 are aligned in the Y-axis direction and the Z-axis direction and the distance between the nano positioning stage 4 and the sample stand 2 in the X-axis direction is close to the length of the torque lever, the micro-movement system of the sample stand 2 can be adjusted to find a point suitable for an indentation test, and then the micro-nano test module is driven to perform the indentation test.

The sample cell 2-6 is a barrel-shaped hollow structure with an outer edge fitting an inner edge of the sample cell mounting chamber 2-1, an inner container of the sample cell 2-6 is made from copper, and the hydrate sample 2-7 is mounted in the sample cell 2-6. The bottom of the sample cell 2-6 is in close contact with the sample stand 2, a heat-insulation protective layer 2-11 is arranged on an outer layer of a side wall of the sample cell 2-6, the heat-insulation protective layer 2-11 is made from insulating resin, and an outer edge of the insulating resin fits the inner edge of the sample cell mounting chamber to fix the sample cell and realize the indentation test.

Particularly, a semi-closed transparent isolation hood 2-14 is mounted above the sample stand, the bottom of the isolation hood 2-14 is matched with the sample stand 2, a hole for indenting and withdrawing the nano probe 5-1 is formed in the top of the isolation hood 2-14, and a hole is formed in a side wall of the isolation hood 2-14 to allow the optical microscope 3 to stretch in to observe the natural gas hydrate sample.

In addition, it should be noted that an end, at the sample cell mounting chamber 2-1, of the heat-conduction copper sheet 2-4 is in direct contact with the bottom of the sample cell 2-6, an end, at the liquid nitrogen containing chamber 2-2, of the heat-conduction copper sheet 2-4 is in direct contact with the liquid nitrogen 2-13, and a heat-insulation protective layer 2-11 is arranged on the periphery of a portion, between the sample cell mounting chamber 2-1 and the liquid nitrogen containing chamber 2-2, of the heat-conduction copper sheet 2-4.

## Claims

1. A nanoindentation device for hydrates, comprising a glovebox and a control cabinet, wherein the glovebox is configured to be used for providing a clean environment for hydrate testing and comprising three cavities which are a contaminated zone, a transition zone and a static zone respectively, the static zone is connected to a vacuum pump X1 and high-purity liquid nitrogen X2 respectively, a sample stand (2), an optical microscope (3) and an anti-vibration platform (6) are mounted in the static zone; the sample stand (2) is arranged on the anti-vibration platform (6); the sample stand (2) comprises a sample cell mounting chamber (2-1) for mounting and fixing a sample cell (2-6) and a liquid nitrogen containing chamber (2-2) for containing liquid nitrogen (2-13);
**characterized in that**
a micro-nano test module and a nano positioning stage (4) are also mounted in the static zone, the nano positioning stage (4) is arranged on the anti-vibration platform (6), the micro-nano test module is arranged on the nano positioning stage (4), and the sample stand (2) and the nano positioning stage (4) are mounted in parallel;
the micro-nano test module comprises a piezoelectric actuator (5-4), a support lever (5-3), a torque lever (5-2) and a nano probe (5-1), the torque lever (5-2) uses an endpoint of the support lever (5-3) as a support point and has two ends connected to the piezoelectric actuator (5-4) and the nano probe (5-1) respectively, the nano probe (5-1) is located right above a hydrate sample (2-7), the piezoelectric actuator (5-4) drives one said end of the torque lever (5-2) to move upwards and downwards to indent in and pull out the nano probe (5-1); the nano positioning stage (4) drives the micro-nano test module to perform indentation on the hydrate sample (2-7) on the sample stand (2), records displacement and force parameters when performing indentation on the hydrate sample, and transmits the displacement and force parameters to the control cabinet in real time;
the optical microscope (3) is obliquely mounted above the sample stand (2) and is configured to be used for assisting in locating an indentation point and observing in real time a morphology change of the hydrate sample when the micro-nano test module performs indentation; and
the sample cell mounting chamber (2-1) and the liquid nitrogen containing chamber (2-2) are isolated by means of a heat insulation plate (2-3) and connected by means of a heat-conduction copper sheet (2-4).

2. The nanoindentation device for hydrates according to Claim 1, **characterized in that** the nano positioning stage (4) comprises a macro-movement system (4-2) and a micro-movement system (4-1), the macro-movement system (4-2) is mounted on the anti-vibration platform (6) by means of nano positioning stage support rods (4-4), and the micro-movement system (4-1) is mounted above the macro-movement system (4-2) and connected to the macro-movement system (4-2) by means of suspension supports (4-3); and each of the macro-movement system (4-2) and the micro-movement system (4-1) comprises two sliding rail systems which are in an X-axis direction and a Y-axis direction respectively, movement ranges of the macro-movement system (4-2) in the X-axis direction and the Y-axis direction are at a centimeter level, and movement ranges of the micro-movement system in the X-axis direction and the Y-axis direction are at a micron level.

3. The nanoindentation device for hydrates according to Claim 1, **characterized in that** a laser alignment hole is formed in a side, close to the nano positioning stage (4), of the sample stand (2), and a laser alignment light source is arranged on a side, close to the sample stand (2), of the nano positioning stage (4); and when the laser alignment light source and the laser alignment hole are aligned, the sample stand (2) and the nano positioning stage (4) are aligned in a Y-axis direction and a Z-axis direction, and a distance between the sample stand (2) and the nano positioning stage (4) in an X-axis direction is measured by laser ranging after alignment.

4. The nanoindentation device for hydrates according to Claim 1, **characterized in that** two sliding rail systems (2-10) allowing the sample stand (2) to move in an X-axis direction and a Y-axis direction are mounted below the sample stand (2) and configured to be used for controlling movement of the sample stand (2) in the X-axis direction and the Y-axis direction.

5. The nanoindentation device for hydrates according to Claim 1, **characterized in that** an end, at the sample cell mounting chamber (2-1), of the heat-conduction copper sheet (2-4) is in direct contact with a bottom of the sample cell (2-6), and an end, at the liquid nitrogen containing chamber (2-2), of the heat-conduction copper sheet (2-4) is in direct contact with the liquid nitrogen (2-13).

6. The nanoindentation device for hydrates according to Claim 1, **characterized in that** a temperature probe (2-8) and an electromagnetic heating pad (2-9) are arranged at a bottom of the sample cell mounting chamber (2-1); and in a case where a temperature of the bottom of the sample cell mounting chamber (2-1) falls below a set temperature under the action of a temperature of the liquid nitrogen conducted by the heat-conduction copper sheet (2-4), the electromagnetic heating pad (2-9) is started automatically to heat the sample cell (2-6) to keep a temperature of a bottom of the sample cell (2-6) constant.

7. The nanoindentation device for hydrates according to Claim 1, **characterized in that** the sample cell (2-6) is a barrel-shaped hollow structure with an outer edge fitting an inner edge of the sample cell mounting chamber (2-1), a bottom of the sample cell (2-6) is in close contact with the sample stand (2), an inner container of the sample cell (2-6) is made from copper, the hydrate sample (2-7) is mounted in the sample cell (2-6), and a heat-insulation protective layer (2-11) is arranged on an outer layer of a side wall of the sample cell (2-6).

8. The nanoindentation device for hydrates according to Claim 1, **characterized in that** the liquid nitrogen containing chamber (2-2) is provided with a semi-closed transparent isolation hood (2-14), a bottom of the isolation hood (2-14) is matched with the sample stand (2), a hole for indenting and withdrawing the nano probe (5-1) is formed in a top of the isolation hood (2-14), and a hole is formed in a side wall of the isolation hood (2-14) to allow the optical microscope (3) to stretch in to observe the natural gas hydrate sample.

## Patentansprüche

1. Eine Nanoindentierungsvorrichtung für Hydrate, die eine Handschuhbox und einen Schaltschrank umfasst, wobei die Handschuhbox so konfiguriert ist, dass sie zur Bereitstellung einer sauberen Umgebung für Hydrattests verwendet wird und drei Hohlräume umfasst, nämlich eine kontaminierte Zone, eine Übergangszone und eine statische Zone, wobei die statische Zone an eine Vakuumpumpe X1 bzw. hochreinen flüssigen Stickstoff X2 angeschlossen ist, ein Probenständer (2), ein optisches Mikroskop (3) und eine Antivibrationsplattform (6) in der statischen Zone montiert sind; der Probenständer (2) auf der Antivibrationsplattform (6) angeordnet ist; der Probenständer (2) eine Probenzellenmontagekammer (2-1) zum Montieren und Fixieren einer Probenzelle (2-6) und eine Flüssigstickstoffaufnahmekammer (2-2) zur Aufnahme von flüssigem Stickstoff (2-13) umfasst;
**dadurch gekennzeichnet, dass**
ein Mikro-Nano-Testmodul und eine Nano-Positionierungsstufe (4) ebenfalls in der statischen Zone montiert sind, die Nano-Positionierungsstufe (4) auf der Antivibrationsplattform (6) angeordnet ist, das Mikro-Nano-Testmodul auf der Nano-Positionierungsstufe (4) angeordnet ist und der Probenständer (2) und die Nano-Positionierungsstufe (4) parallel montiert sind;
das Mikro-Nano-Testmodul einen piezoelektrischen Aktuator (5-4), einen Stützhebel (5-3), einen Drehmomenthebel (5-2) und eine Nanosonde (5-1) umfasst; der Drehmomenthebel (5-2) einen Endpunkt des Stützhebels (5-3) als Stützpunkt nutzt und mit zwei Enden mit dem piezoelektrischen Aktuator (5-4) bzw. der Nanosonde (5-1) verbunden ist; die Nanosonde (5-1) sich direkt über einer Hydratprobe (2-7) befindet; der piezoelektrische Aktuator (5-4) ein Ende des Drehmomenthebels (5-2) antreibt, um sich nach oben und unten zu bewegen und die Nanosonde (5-1) einzudrücken bzw. herauszuziehen; der Nano-Positioniertisch (4) das Mikro-Nano-Testmodul antreibt, um die Hydratprobe (2-7) auf dem Probenständer (2) einzudrücken, beim Eindrücken der Hydratprobe Weg- und Kraftparameter aufzeichnet und die Weg- und Kraftparameter in Echtzeit an den Schaltschrank überträgt;
das optische Mikroskop (3) schräg über dem Probenständer (2) angebracht und so konfiguriert ist, dass es bei der Lokalisierung eines Eindruckspunkts hilft und in Echtzeit eine Morphologieänderung der Hydratprobe beobachtet, wenn das Mikro-Nano-Testmodul eine Indentierung durchführt; und
die Probenzellenmontagekammer (2-1) und die Flüssigstickstoff enthaltende Kammer (2-2) mittels einer Wärmeisolationsplatte (2-3) isoliert und mittels eines wärmeleitenden Kupferblechs (2-4) verbunden sind.

2. Die Nanoindentierungsvorrichtung für Hydrate nach Anspruch 1, **dadurch gekennzeichnet, dass** die Nanopositionierungsstufe (4) ein Makrobewegungssystem (4-2) und ein Mikrobewegungssystem (4-1) umfasst, das Makrobewegungssystem (4-2) ist mittels Stützstangen (4-4) für Nanopositionierungstische auf der Antivibrationsplattform (6) montiert ist und das Mikrobewegungssystem (4-1) über dem Makrobewegungssystem (4-2) montiert und mittels Aufhängungsstützen (4-3) mit dem Makrobewegungssystem (4-2) verbunden ist; und jedes der Makrobewegungssysteme (4-2) und des Mikrobewegungssystems (4-1) zwei Gleitschienensysteme umfasst, die sich jeweils in einer X-Achsenrichtung und einer Y-Achsenrichtung befinden, wobei die Bewegungsbereiche des Makrobewegungssystems (4-2) in der X-Achsenrichtung und der Y-Achsenrichtung im Zentimeterbereich liegen und die Bewegungsbereiche des Mikrobewegungssystems in der X-Achsenrichtung und der Y-Achsenrichtung im Mikrometerbereich liegen.

3. Die Nanoindentierungsvorrichtung für Hydrate nach Anspruch 1, **dadurch gekennzeichnet, dass** an einer Seite des Probenständers (2) in der Nähe des Nanopositionierungstisches (4) ein Laserausrichtungsloch ausgebildet ist und an einer Seite des Nanopositionierungstisches (4) in der Nähe des Probenständers (2) eine Laserausrichtungslichtquelle angeordnet ist; wenn die Laserausrichtungslichtquelle und das Laserausrichtungsloch ausgerichtet sind, werden der Probenständer (2) und der Nanopositionierungstisch (4) in einer Y-Achsenrichtung und einer Z-Achsenrichtung ausgerichtet und ein Abstand zwischen dem Probenständer (2) und dem Nanopositionierungstisch (4) in einer X-Achsenrichtung wird nach der Ausrichtung durch Laserentfernungsmessung gemessen.

4. Die Nanoindentierungsvorrichtung für Hydrate nach Anspruch 1, **dadurch gekennzeichnet, dass** zwei Gleitschienensysteme (2-10), die eine Bewegung des Probenständers (2) in einer X-Achsenrichtung und einer Y-Achsenrichtung ermöglichen, unter dem Probenständer (2) montiert sind und so konfiguriert sind, dass sie zur Steuerung der Bewegung des Probenständers (2) in der X-Achsenrichtung und der Y-Achsenrichtung verwendet werden können.

5. Die Nanoindentierungsvorrichtung für Hydrate nach Anspruch 1, **dadurch gekennzeichnet, dass** ein Ende der wärmeleitenden Kupferfolie (2-4) an der Probenzellenmontagekammer (2-1) in direktem Kontakt mit einem Boden der Probenzelle (2-6) steht und ein Ende des wärmeleitenden Kupferblechs (2-4) an der Flüssigstickstoffaufnahmekammer (2-2) in direktem Kontakt mit dem Flüssigstickstoff (2-13) steht.

6. Die Nanoindentierungsvorrichtung für Hydrate nach Anspruch 1, **dadurch gekennzeichnet, dass** ein Temperaturfühler (2-8) und ein elektromagnetisches Heizkissen (2-9) an einem Boden der Probenzellenmontagekammer (2-1) angeordnet sind; und in einem Fall, in dem eine Temperatur des Bodens der Probenzellenmontagekammer (2-1) unter die Einwirkung einer Temperatur des flüssigen Stickstoffs, der durch das wärmeleitende Kupferblech (2-4) geleitet wird, unter eine eingestellte Temperatur fällt, das elektromagnetische Heizkissen (2-9) automatisch gestartet wird, um die Probenzelle (2-6) zu erhitzen und eine Temperatur eines Bodens der Probenzelle (2-6) konstant zu halten.

7. Die Nanoindentierungsvorrichtung für Hydrate nach Anspruch 1, **dadurch gekennzeichnet, dass** die Probenzelle (2-6) eine tonnenförmige Hohlstruktur mit einem Außenrand ist, der mit einem Innenrand der Probenzellenmontagekammer (2-1) zusammenpasst, ein Boden der Probenzelle (2-6) in engem Kontakt mit dem Probenständer (2) steht, ein Innenbehälter der Probenzelle (2-6) aus Kupfer besteht, die Hydratprobe (2-7) in der Probenzelle (2-6) montiert ist und eine wärmeisolierende Schutzschicht (2-11) auf einer Außenschicht einer Seitenwand der Probenzelle (2-6) angeordnet ist.

8. Die Nanoindentierungsvorrichtung für Hydrate nach Anspruch 1, **dadurch gekennzeichnet, dass** die Flüssigstickstoff enthaltende Kammer (2-2) mit einer halbgeschlossenen transparenten Isolationshaube (2-14) versehen ist, ein Boden der Isolationshaube (2-14) mit dem Probenständer (2) übereinstimmt, ein Loch zum Eindrücken und Herausziehen der Nanosonde (5-1) in einer Oberseite der Isolationshaube (2-14) ausgebildet ist und ein Loch in einer Seitenwand der Isolationshaube (2-14) ausgebildet ist, um das optische Mikroskop (3) hineinfahren zu lassen, um die Erdgashydratprobe zu beobachten.

## Revendications

1. Dispositif de nano-indentation d'hydrates, comprenant une boîte à gants et une armoire de commande, dans lequel la boîte à gants est configurée pour être utilisée pour fournir un environnement propre pour l'analyse des hydrates et comprenant trois cavités qui sont respectivement une zone contaminée, une zone de transition et une zone statique, la zone statique est connectée à une pompe à vide X1 et à de l'azote liquide de haute pureté X2, respectivement, un support d'échantillonnage (2), un microscope optique (3) et une plate-forme anti-vibration (6) sont montés dans la zone statique ; le support d'échantillonnage (2) est disposé sur la plate-forme anti-vibration (6) ; le support d'échantillonnage (2) comprend une chambre de montage de cellule d'échantillonnage (2-1) pour le montage et la fixation d'une cellule d'échantillonnage (2-6) et une chambre de rétention d'azote liquide (2-2) pour contenir de l'azote liquide (2-13) ;
**caractérisé en ce que**
un module d'essai micro-nano et un étage de nano-positionnement (4) sont également montés dans la zone statique, l'étage de nano-positionnement (4) est disposé sur la plate-forme anti-vibration (6), le module d'essai micro-nano est disposé sur l'étage de nano-positionnement (4), et le support d'échantillonnage (2) et l'étage de nano-positionnement (4) sont montés en parallèle ;
le module de test micro-nano comprend un actionneur piézoélectrique (5-4), un levier de support (5-3), un levier de couple (5-2) et une nanosonde (5-1), le levier de couple (5-2) utilise un point d'extrémité du levier de support (5-3) comme point de support et a deux extrémités connectées à l'actionneur piézoélectrique (5-4) et à la nanosonde (5-1) respectivement, la nanosonde (5-1) est située juste au-dessus d'un échantillon d'hydrate (2-7), l'actionneur piézoélectrique (5-4) entraîne l'une des extrémités du levier de couple (5-2) pour se déplacer vers le haut et vers le bas afin d'indenter et de tirer la nanosonde (5-1) ; l'étage de nano-positionnement (4) pilote le module de test micro-nano pour effectuer l'indentation sur l'échantillon d'hydrate (2-7) sur le support d'échantillon (2), enregistre les paramètres de déplacement et de force lors de l'exécution de l'indentation sur l'échantillon d'hydrate, et transmet les paramètres de déplacement et de force à l'armoire de commande en temps réel ;
le microscope optique (3) est monté obliquement au-dessus du support d'échantillon (2) et est configuré pour être utilisé pour aider à localiser un point d'indentation et observer en temps réel un changement morphologique de l'échantillon d'hydrate lorsque le module de test micro-nano effectue l'indentation ; et
la chambre de montage de la cellule d'échantillonnage (2-1) et la chambre de confinement de l'azote liquide (2-2) sont isolées au moyen d'une plaque d'isolation thermique (2-3) et reliées au moyen d'une feuille de cuivre à conduction thermique (2-4).

2. Dispositif de nano-indentation d'hydrates selon la revendication 1, **caractérisé en ce que** la platine de nano-positionnement (4) comprend un système de macro-mouvement (4-2) et un système de micromouvement (4-1), le système de macro-mouvement (4-2) est monté sur la plate-forme anti-vibration (6) au moyen de tiges de support de platine de nano-positionnement (4-4), et le système de micromouvement (4-1) est monté au-dessus du système de macro-mouvement (4-2) et relié au système de macro-mouvement (4-2) au moyen de supports de suspension (4-3) ; et chacun des systèmes de macro-mouvement (4-2) et de micromouvement (4-1) comprend deux systèmes de rails coulissants qui sont respectivement dans une direction de l'axe X et une direction de l'axe Y, les amplitudes de mouvement du système de macro-mouvement (4-2) dans la direction de l'axe X et la direction de l'axe Y sont au niveau centimétrique, et les amplitudes de mouvement du système de micromouvement dans la direction de l'axe X et la direction de l'axe Y sont au niveau du micron.

3. Dispositif de nano-indentation d'hydrates selon la revendication 1, **caractérisé en ce qu'**un trou d'alignement laser est formé dans un côté, proche de l'étage de nano-positionnement (4), du support d'échantillon (2), et qu'une source lumineuse d'alignement laser est disposée sur un côté, proche du support d'échantillon (2), de l'étage de nano-positionnement (4) ; et lorsque la source lumineuse d'alignement laser et le trou d'alignement laser sont alignés, le support d'échantillon (2) et l'étage de nano-positionnement (4) sont alignés dans une direction de l'axe Y et une direction de l'axe Z, et une distance entre le support d'échantillon (2) et l'étage de nano-positionnement (4) dans une direction de l'axe X est mesurée par télémétrie laser après alignement.

4. Dispositif de nano-indentation d'hydrates selon la revendication 1, **caractérisé en ce que** deux systèmes de rails coulissants (2-10) permettant à la colonne d'échantillon (2) de se déplacer dans une direction de l'axe X et une direction de l'axe Y sont montés sous la colonne d'échantillon (2) et configurés pour être utilisés pour contrôler le mouvement de la colonne d'échantillon (2) dans la direction de l'axe X et dans la direction de l'axe Y.

5. Dispositif de nano-indentation d'hydrates selon la revendication 1, **caractérisé en ce qu'**une extrémité, au niveau de la chambre de montage de la cellule d'échantillonnage (2-1), de la feuille de cuivre à conduction thermique (2-4) est en contact direct avec un fond de la cellule d'échantillonnage (2-6), et qu'une extrémité, au niveau de la chambre contenant de l'azote liquide (2-2), de la feuille de cuivre à conduction thermique (2-4) est en contact direct avec l'azote liquide (2-13).

6. Dispositif de nano-indentation d'hydrates selon la revendication 1, **caractérisé en ce qu'**une sonde de température (2-8) et un coussin chauffant électromagnétique (2-9) sont disposés au fond de la chambre de montage de la cellule d'échantillonnage (2-1) ; et dans le cas où une température du fond de la chambre de montage de la cellule d'échantillonnage (2-1) tombe en dessous d'une température de consigne sous l'action d'une température de l'azote liquide conduite par la feuille de cuivre à conduction thermique (2-4), le coussin chauffant électromagnétique (2-9) est démarré automatiquement pour chauffer la cellule d'échantillonnage (2-6) afin de maintenir constante la température d'un fond de la cellule d'échantillonnage (2-6).

7. Dispositif de nano-indentation d'hydrates selon la revendication 1, **caractérisé en ce que** la cellule d'échantillonnage (2-6) est une structure creuse en forme de tonneau avec un bord extérieur s'adaptant à un bord intérieur de la chambre de montage de la cellule d'échantillonnage (2-1), qu'un fond de la cellule d'échantillonnage (2-6) est en contact étroit avec le support d'échantillon (2), qu'un récipient intérieur de la cellule d'échantillon (2-6) est en cuivre, l'échantillon d'hydrate (2-7) est monté dans la cellule d'échantillonnage (2-6), et une couche protectrice d'isolation thermique (2-11) est disposée sur une couche externe d'une paroi latérale de la cellule d'échantillonnage (2-6).

8. Dispositif de nano-indentation d'hydrates selon la revendication 1, **caractérisé en ce que** la chambre contenant de l'azote liquide (2-2) est pourvue d'un capot d'isolement (2-14) transparent semi-fermé, qu'un fond du capot d'isolement (2-14) est adapté au support d'échantillon (2), qu'un trou pour l'indentation et le retrait de la nanosonde (5-1) est formé dans un haut du capot d'isolement (2-14), et un trou est formé dans une paroi latérale du capot d'isolement (2-14) pour permettre au microscope optique (3) de s'étirer pour observer l'échantillon d'hydrate de gaz naturel.
